# EUROPEAN PATENT SPECIFICATION

(11) **EP 2 371 438 B1**
(45) Date of publication and mention of the grant of the patent: **11.03.2020**
(21) Application number: 11159928.8
(22) Date of filing: 28.03.2011
(51) Int. Cl.: B01D 19/00

(54) **Liquid/gas separator device**
FLUESSIGKEITSGAS-ABSCHEIDER
Séparateur gaz-liquide

(30) Priority: 31.03.2010 IT TV20100048
(43) Date of publication of application: 05.10.2011
(73) Proprietor: MicroPROGEL SRL, 35038 Torreglia (PD) (IT)
(72) Inventor: Gaffo, Valter, 35 Torreglia (PD) (IT)
(74) Representative: Citron, Massimiliano

(56) References cited:
- WO-A1-2004/057153
- WO-A1-2010/034325
- AU-A- 6 323 373
- CA-A1- 2 595 031
- US-A- 5 389 264
- US-A- 5 743 135

## Description

The present invention relates to a liquid/gas separator device, in particular for water/hydrogen.

Nowadays devices are known which separate oxygen from a gas, in particular from hydrogen (H₂). Given a mixture of water (H₂O) and gas these must be separated as thoroughly as possible. This need arises above all for H₂ generators using PEM (Proton Exchange Membrane) cells. At the outlet of the PEM cell, by its very nature, H₂ and H₂O are obtained, from which the need to separate them.
Normally the water is disposed of and the hydrogen re-emitted as fuel or a carrier gas for chemical analysis.

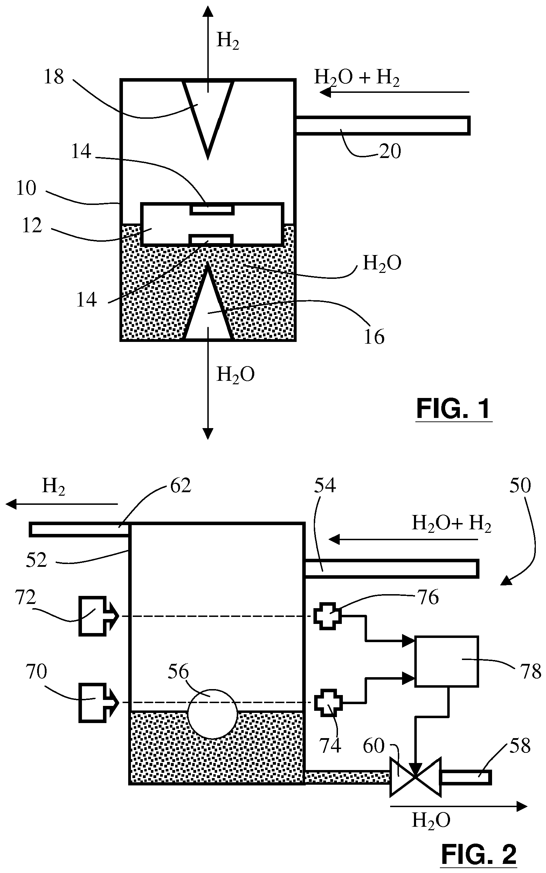

Said equipment functions mechanically- see Fig.1 using an extremely primitive functioning principle. A mixture of H₂O and H₂ reaches a tank 10 through a duct 20, pushed by the pressure of a PEM cell upstream of the same (not shown). A float 12 is present in the tank 10 which is free to float and which is fitted with two rubber portions 14, one on the top side and one on the bottom side. The bottom of the tank 10 is not flat but raised in the centre by a cone 16, which is hollow and open at the tip. A similar cone 18 is positioned on the top of the tank 10 and acts as a vent.

The water reaching the tank 10 falls to the bottom and accumulates while the hydrogen, which is volatile, escapes from the cone 18. When the water reaches a sufficient level to raise the float 12, it begins to flow out through the cone 16, otherwise the lower rubber portion 14 closes the cone 16 and there is no outflow. The upper rubber portion 14 rather, is used to prevent the water from coming out of the cone 18 should the cone 16 become obstructed.

There are many problems with this system, that is to say:
- the sizing of the float is difficult, since this depends on the working pressure of the hydrogen and of the mixture reaching the tank 10;
- complicated mechanical machining is required to make the float 12 and the cones 16, 18, especially where the rubber portions 14 abut with the cones. Here machining must be extremely precise because otherwise the float 12 could get stuck;
- there is no direct way of knowing if the device malfunctions, in particular if there are leaks of water or hydrogen;
- it is sufficient for a minute foreign body (even of a hundredth of a mm) to deposit on the outlet orifice of the cone 16 or 18 to obstruct it or to interfere with the closure, jeopardising its functioning;
- it is not possible to insert a filter before the outlet hole;
- deterioration of the rubber parts 14 causes immediate malfunctioning of the system, thereby making their regular replacement necessary. This is because an important feature of the device is that no hydrogen escapes together with the water;
- in the presence of vibrations the systems develops leaks of hydrogen.

WO 2010/034325 refers to a liquid control that regulates a liquid between two liquid levels, minimum and maximum. During operation, the gas-liquid interface between the liquid flowing along the bottom wall and free gas above the interface is kept on or to some extent above of a minimum lower level above an uppermost edge of a port opening of the liquid outlet port to prevent discharge of free gas through the liquid outlet port.

US 5 743 135 describes a liquid level monitor that uses a tube to confine a float to a vertical path with a canister containing a lower liquid and an upper liquid which meet at a liquid boundary, the level of which is to be monitored.

The main object of the present invention is to improve this state of the art. This object is achieved by a device which functions reliably over time.

This and other objects are achieved by a separator device as defined in claim 1, while preferred embodiments of the invention are contained in the dependent claims.

The following description of a preferred embodiment will highlight the advantages of the invention, also illustrated in the appended drawing wherein:
fig. 1 shows a schematic view of a known separator;
fig.2 shows a schematic view of a separator according to the invention;
fig.3 shows a three-dimensional view of the separator in fig.2;
fig.4 shows a three-dimensional view in cross-section of fig.2;
fig. 5 shows a three-dimensional view in cross-section of a variation of the separator;
fig.6 shows a lateral view in cross-section of the variant in fig.5;

A device according to the invention is indicated by reference numeral 50. It comprises a tank 52 which a mixture of H₂ and H₂O reaches through a duct 54, pushed by the pressure of a PEM cell upstream of the same (not shown). A ball float 56 is present in the tank 52 and free to float on the water which accumulates. The spherical shape of the float is advantageous because it eliminates any risk of it getting stuck.

The bottom of the tank 52 communicates by means of a water outflow duct 58 with a solenoid valve 60, used to block the flow of water towards a collection tank (not shown). In place of the solenoid valve 60 proportional valves or equivalent valve devices may also be used. The top of the tank 52 communicates rather by means of a hydrogen outflow duct 62 towards hydrogen collection means (not shown).

On the outside of the lateral walls of the tank 52 are two infrared transmitters 70, 72 (e.g. IR LEDs), and two infrared sensors or receivers 74, 76 (e.g. IR photodiodes), arranged in pairs on a horizontal axis so that a sensor receives the infrared beam from the respective transmitter. The two sensors 70, 72 are connected to a microprocessor or processing unit 78, which receives the signal. The microprocessor 78 is in turn connected to the valve 60 to drive its opening or closing. The tank 52 is preferably made of transparent material, such as Plexiglas®. This way the electronics and especially the IR emitters 70, 72 may be situated externally to the tank 52, near its outer lateral surface, and the IR rays intercept the float 56 better.

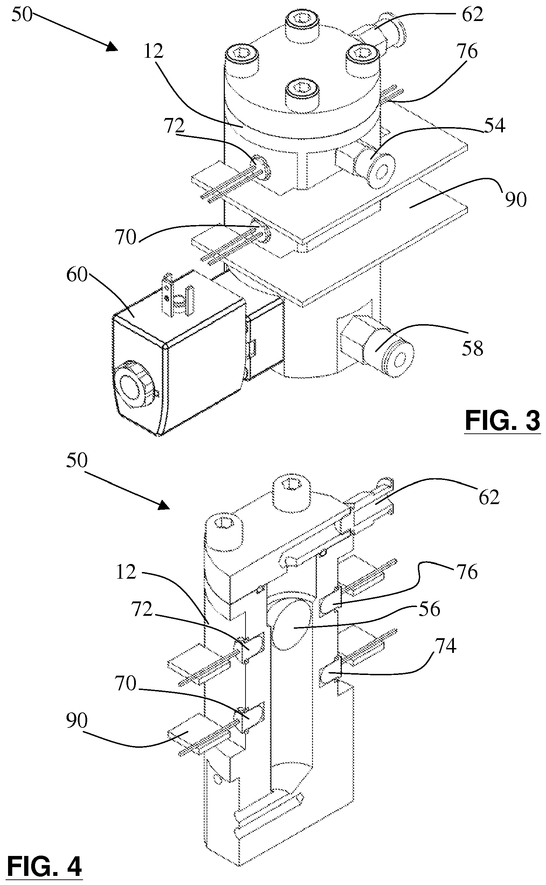

Advantageously, the transmitters 70, 72 and the two receivers 74, 76 are mounted on relative printed circuits 90 (U-shaped) which are placed closely around the tank 52 (fig. 3). Note that other types of sensors may be used for the water level e.g. capacity sensors, a video camera etc. The functioning of the device 50 is as follows:
Thanks to the pressure of the mixture of H₂O and H₂ (above atmospheric pressure) and/or to gravity, both H₂O and H₂ reach the tank 52 from the duct 54.

The water descends and accumulates on the bottom of the tank 52, while the hydrogen rises upwards. As the water accumulates it raises the float 56 until it comes to position itself between and be detected by, the first IR emitter and receiver 70, 74, pair which in relation to the bottom is situated lower down than the other pair 72, 76.

The microprocessor 78 acts by means of a suitable logic or program and operates the valve 60 switching its state from open to closed or vice versa. By exploiting the internal pressure in the tank 52, with the valve 60 open the water comes out spontaneously along the duct 58. A small part of the liquid always remains to prevent the hydrogen from coming out of the bottom through the duct 58.

The valve 60 is pulse-operated, preferably at intervals of 500msec for a time varying from 5 ms to 30 ms. This way the water comes out in small quantities without generating particular pressure drops. For greater precision, it is preferred that the infrared means 70, 74 (and 72, 76), the microprocessor 78 and the valve 60 constitute a feedback loop, wherein for example the algorithm performed digitally by the microprocessor 78 is of the PID type.

The pulsed operation of the valve 60 therefore makes the water level remain constant at the (approximate) height of the infrared devices 70, 74 (or rather of their beam).

If the water level increases so much as to bring the float 56 to interrupt the IR beam of the second infrared emitter 72, the system interprets this condition as indicating that water drainage is not functioning correctly and therefore signals the event to activate the appropriate safety measures. This is dealt with by a specific part of code in the microprocessor 78, which can force the maximum aperture of the valve 60 and/or activate acoustic or visual signals, and/or send a specific signal to a remote PC and/or handle the visualisation of an alarm message on a display (not shown).

As a further safety measure, the float 56 not reaching a sufficient height to obstruct the beam of the first sensor may be considered a system anomaly. Again, this may be dealt with by a specific part of code of the microprocessor 78, which may be connected to, or internally simulate, timer means. When an established maximum time has elapsed, the microprocessor 78 may activate and/or handle signalling of an alarm (e.g. using the devices and methods indicated for the previous condition).

During trial tests it was observed that drops may form on the walls of the tank 52 as a result of phenomena related to pressure, temperature and water impurities, disturbing direct measurement. To make measurement safer, a float (e.g. a small plastic sphere) or opaque floating element is inserted to make it interrupt a beam of electromagnetic radiation.

The position of the outtake from the tank 52 for the water, upstream of the duct 58, may also be at a certain height from the bottom of the tank 52, so as to make a small sub-tank or volume (in its lower part) in the tank 52 for the deposit of any impurities.

From what has been said, it is easy to see that the advantages of the separator 50 are many. As well as its compact dimensions, it is produced with low mechanical machining costs. Reliability is decidedly superior, for example since there are no drainage holes smaller than 0.3 mm which could become obstructed. There is then a system for detecting functioning failure, entirely lacking in the prior art. Electronic control lastly guarantees the necessary programming versatility of the functions and intervention precision.

It should be noted that the use of a solenoid valve makes the separator 50 immune from the presence of any foreign bodies in the H₂O + H₂ mixture, at least of small dimensions. The solenoid valve 60 is by nature an extremely reliable component, so that maintenance is reduced to a minimum. It should be emphasised that in the separator 50 the user can constantly check if the system is functioning or not, making the system more reliable. To such purpose the microprocessor 78 may be interfaced with visualisation (display, monitor, etc.) and/or alarm and/or signalling means.

Another advantage is the possibility of working in the presence of vibrations.

The models of the prior art, in the presence of vibrations, shows leakage of H₂, which does not occur with the invention.

Figures 5 and 6 show a variant 100 for the separator device of the invention. As can be seen there is a filter 104 (e.g. in steel or titanium fibre) placed on the bottom of the tank 112 upstream of the exit duct 102 of H₂O. The filter 104 takes the form of a foil or disc, placed over the mouth of the water outflow duct.

By means of the filter 104 a foreign body is prevented from blocking the outflow duct or hole 102 for the water and the solenoid valve 160 downstream of it. It should be noted that the conditions for use of a proportional rather than ON/OFF-valve thus become more favourable. In the system of the prior art described initially a filter cannot be placed in this position. The only option would be to place it before the entrance of the separator but, should it become obstructed, this would generate a safety problem - of overpressure- of the upstream circuit.

## Claims

1. Water/hydrogen separator device (50) for separating the gas from the liquid comprising
- a container (52) to contain the mixture of liquid and gas,
- a duct (54) through which a liquid/gas mixture can reach the container (52),
- an outflow (58) for the liquid from the container,
- a gas outflow duct (62) from the container,
- measurement means (70, 74) for measuring the reaching of a level of liquid in the container;
- valve means (60) positioned on the outflow for the liquid;
- control means (78) cooperating with the measuring means so as to receive the measurement of the level of liquid and adapted to act consequentially on the valve means to maintain a predefined maximum level of liquid in the container.
**characterised in that**
the measurement means comprise
- emitter (70, 72) and receiver (74,76) means of electromagnetic radiations adapted for generating a beam of electromagnetic radiation, and
- a floating element (56) adapted for floating on a quantity of liquid which accumulates on the bottom of the container and for interrupting a beam of the electromagnetic radiations at a predefined level, and
the control means comprise a processing unit (78) receiving a signal from the emitter (70, 72) and receiver (74,76) means.

2. Device according to claim 1, wherein the processing unit (78) is a microprocessor.

3. Device according to claim 1, wherein the floating element (56) is a ball float.

4. Device according to any one of the previous claims, wherein the tank (52) is made of transparent material.

5. Device according to any one of the previous claims, comprising second measurement means (74, 76) for measuring a second level of liquid in the container above said predefined level of liquid, and wherein the control means co-operate with the second measurement means to signal an anomaly and/or stop the device and/or force the state of the valve means if the level of liquid reaches said second level.

6. Device according to any one of the previous claims from 1 to 5, wherein the emitter and receiver means of electromagnetic radiations are mounted on a printed circuit (80) placed around or in such a manner as to embrace the tank (52).

7. Device according to any one of the previous claims, comprising timer means associated with the control means, the latter being adapted to signal an anomaly and/or stop the device and/or force the state of the valve means if, within a predefined time measured by the timer means, the measurement means do not indicate reaching of a minimum level of liquid.

8. Device according to any one of the previous claims, wherein the outflow of liquid on the container (52) is situated at a certain height from the bottom of the container (52), so as to make a small sub-tank or volume in the tank (52) for the deposit of any impurities.

9. Device according to any one of the previous claims, wherein the control means are configured to operate on the valve means (60) periodically switching their status from open to closed or vice versa.

10. Device according to any one of the previous claims, wherein the measurement means, control means and valve means are connected so as to form a feedback system the reference of which is a predefined level of the liquid.

11. Device according to any one of the previous claims, comprising a filter (104) placed between the valve means and the outflow for the liquid from the tank suitable to withhold any corpuscles present in the liquid.

## Patentansprüche

1. Wasser/Wasserstoff-Abscheidevorrichtung (50) zum Abscheiden von Gas aus der Flüssigkeit umfassend
- einen Behälter (52) zur Aufnahme des Gemisches aus Flüssigkeit und Gas,
- eine Leitung (54), durch die ein Gemisch aus Flüssigkeit/Gas in den Behälter (52) gelangen kann;
- eine Ableitung (58) aus dem Behälter (52) für die Flüssigkeit;
- eine Gasableitung (62) aus dem Behälter (52);
- Messmittel (70, 74) zur Messung des Erreichens eines Flüssigkeitsniveaus im Behälter;
- Ventilmittel (60), die an der Flüssigkeitsableitung angeordnet sind;
- Steuermittel (78), die mit den Messmitteln zusammenwirken, um die Messung des Flüssigkeitsniveaus zu empfangen und die so eingerichtet sind, dass sie entsprechend auf die Ventilmittel einwirken, um ein vorgegebenes Flüssigkeitsniveau im Behälter aufrechtzuerhalten,
**dadurch gekennzeichnet dass**
die Messmittel
- Sender- 70, 72) und Empfängermittel (74, 76) elektromagnetischer Strahlung, die eingerichtet sind, einen Strahl elektromagnetischer Strahlung zu erzeugen, und
- ein Schwimmelement (56), das dazu eingerichtet ist, auf einer Flüssigkeitsmenge zu schwimmen, die sich am Boden des Behälters ansammelt, und einen Strahl elektromagnetischer Strahlung auf einem vorgegebenen Niveau zu unterbrechen, umfassen, und dass
die Steuermittel eine Verarbeitungseinheit (78) umfassen, die ein Signal von den Sender- (70, 72) und Empfängermitteln (74, 76) empfängt.

2. Vorrichtung nach Anspruch 1, wobei die Verarbeitungseinheit (78) ein Mikroprozessor ist.

3. Vorrichtung nach Anspruch 1, wobei das Schwimmelement (56) ein kugelförmiger Schwimmer ist.

4. Vorrichtung nach einem der vorhergehenden Ansprüche, wobei der Behälter (52) aus durchsichtigem Material besteht.

5. Vorrichtung nach einem der vorhergehenden Ansprüche, umfassend zweite Messmittel (74, 76) zur Messung eines zweiten Flüssigkeitsniveaus im Behälter oberhalb des genannten vorgegebenen Flüssigkeitsniveaus, und wobei die Steuermittel mit den zweiten Messmitteln zusammenwirken, um eine Störung zu signalisieren und/oder die Vorrichtung anzuhalten und/oder den Zustand der Ventilmittel zu erzwingen, wenn das Flüssigkeitsniveau das genannte zweite Niveau erreicht.

6. Vorrichtung nach einem der vorhergehenden Ansprüche 1 bis 5, wobei die Sender- und Empfängermittel elektromagnetischer Strahlung auf einer Leiterplatte (80) angebracht sind, die um den Tank (52) herum oder so angeordnet ist, dass sie diesen umgibt.

7. Vorrichtung nach einem der vorhergehenden Ansprüche, umfassend den Steuermitteln zugeordnete Zeitgeber, wobei letztere dazu eingerichtet sind, eine Störung zu signalisieren und/oder die Vorrichtung anzuhalten und/oder den Zustand der Ventilmittel zu erzwingen, wenn innerhalb einer von den Zeitgebern gemessenen vorbestimmten Zeit die Messmittel nicht anzeigen, dass ein Mindestflüssigkeitsniveau erreicht wurde.

8. Vorrichtung nach einem der vorhergehenden Ansprüche, wobei der Flüssigkeitsauslass am Behälter (52) auf einer bestimmten Höhe vom Boden des Behälters (52) liegt, um ein kleines Teiltank oder Volumen im Tank (52) zu erhalten, zur Ablagerung von eventuellen Verunreinigungen.

9. Vorrichtung nach einem der vorhergehenden Ansprüche, wobei die Steuermittel so ausgestaltet sind, dass sie auf die Ventilmittel (60) einwirken, indem sie periodisch ihren Zustand von offen auf geschlossen oder umgekehrt umschalten.

10. Vorrichtung nach einem der vorhergehenden Ansprüche, wobei die Mess-, Steuer- und Ventilmittel so verbunden sind, dass sie ein rückgekoppeltes System bilden, dessen Referenz ein vorgegebenes Flüssigkeitsniveau ist.

11. Vorrichtung nach einem der vorhergehenden Ansprüche, umfassend einen Filter (104), der zwischen den Ventilmitteln und dem Flüssigkeitsauslass aus dem Tank angeordnet ist und der dazu eingerichtet ist, in der Flüssigkeit vorhandene Teilchen zurückzuhalten.

## Revendications

1. Dispositif (50) séparateur eau/hydrogène pour séparer le gaz du liquide comprenant
- un récipient (52) pour contenir le mélange de liquide et de gaz,
- un conduit (54) à travers lequel un mélange air/gaz peut atteindre le récipient (52) ;
- un conduit (58) de sortie du récipient (52) pour le liquide ;
- un conduit (62) de sortie du gaz du récipient (52)
- des moyens de mesurage (70, 74) pour mesurer l'atteinte d'un niveau de liquide dans le récipient ;
- des moyens de soupape (60) disposés sur le conduit de sortie du liquide ;
- des moyens de commande (78) coopérant avec les moyens de mesurage pour recevoir la détection du niveau de liquide et adaptés pour fonctionner en conséquence sur les moyens de soupape pour maintenir un niveau prédéterminé de liquide dans le récipient,
**caractérisé en ce que**
les moyens de mesurage comprennent
- des moyens d'émission (70, 72) et de réception (74, 76) de rayonnement électromagnétique adaptés pour générer un faisceau de rayonnement électromagnétique, et
- un élément flottant (56) adapté pour flotter sur une quantité de liquide qui s'accumule au fond du récipient et pour interrompre un faisceau de rayonnement électromagnétique à un niveau prédéterminé, et
les moyens de commande comprennent une unité de traitement (78) qui reçoit un signal des moyens d'émission (70, 72) et de réception (74, 76).

2. Dispositif selon la revendication 1, où l'unité de traitement (78) est un microprocesseur.

3. Dispositif selon la revendication 1, où l'élément flottant (56) est un flotteur sphérique.

4. Dispositif selon l'une des revendications précédentes, où le réservoir (52) est en matériau transparent.

5. Dispositif selon l'une des revendications précédentes, comprenant des deuxièmes moyens de mesurage (74, 76) pour détecter un deuxième niveau de liquide dans le récipient au-dessus dudit niveau de liquide prédéterminé, et où les moyens de commande coopèrent avec les deuxièmes moyens pour signaler une anomalie et/ou arrêter le dispositif et/ou forcer l'état des moyens de soupape si le niveau de liquide atteint ledit deuxième niveau.

6. Dispositif selon l'une des revendications précédentes de 1 à 5, où les moyens d'émission et de réception de rayonnement électromagnétique sont montés sur un circuit imprimé (80) placé autour, ou de manière à embrasser, le réservoir (52).

7. Dispositif selon l'une des revendications précédentes, comprenant des moyens de temporisation associés aux moyens de commande, ces derniers étant adaptés pour signaler une anomalie et/ ou arrêter le dispositif et/ou forcer l'état des moyens de soupape si, dans un temps prédéterminé mesuré par les moyens minuteries, les moyens de mesurage n'indiquent pas l'atteinte d'un niveau minimum de liquide.

8. Dispositif selon l'une des revendications précédentes, où la sortie du liquide sur le récipient (52) est à une certaine distance du fond du récipient (52) lui-même, de manière à obtenir dans le réservoir (52) un petit sous-réservoir ou volume pour tout dépôt d'impuretés.

9. Dispositif selon l'une des revendications précédentes, où les moyens de commande sont configurés pour fonctionner sur les moyens de soupape (60) en commutant périodiquement leur état d'ouverture à fermeture ou vice versa.

10. Dispositif selon l'une des revendications précédentes, où les moyens de mesurage, les moyens de commande et les moyens de soupape sont connectés de manière à former un système de rétroaction dont la référence est un niveau prédéterminé pour le liquide.

11. Dispositif selon l'une des revendications précédentes, comprenant un filtre (104) placé entre les moyens de soupape et la sortie du liquide du réservoir adapté pour retenir d'éventuels corpuscules présents dans le liquide.
